Europäisches Patentamt

European Patent Office

Office européen des brevets

(19)

(11) Veröffentlichungsnummer: **0 163 070**
**B1**

(12) **EUROPÄISCHE PATENTSCHRIFT**

(45) Veröffentlichungstag der Patentschrift: **12.09.90**

(21) Anmeldenummer: **85104132.7**

(22) Anmeldetag: **04.04.85**

(51) Int. Cl.⁵: **G 01 B 7/00,** G 01 B 7/28, G 01 B 5/00, G 01 B 5/20

(54) Zahnmesstaster.

(30) Priorität: **28.05.84 CH 2646/84**

(43) Veröffentlichungstag der Anmeldung: **04.12.85 Patentblatt 85/49**

(45) Bekanntmachung des Hinweises auf die Patenterteilung: **12.09.90 Patentblatt 90/37**

(84) Benannte Vertragsstaaten: **GB IT**

(56) Entgegenhaltungen:
**EP-A-0 103 089**
**CH-A- 563 009**
**DE-B-2 013 639**
**DE-B-2 356 030**
**DE-C-3 302 016**
**FR-A-2 517 049**

(73) Patentinhaber: **Maag-Zahnräder und -Maschinen Aktiengesellschaft Hardstrasse 219 CH-8023 Zürich (CH)**

(72) Erfinder: **Berchtold, Nikolaus Schärenmoosstrasse 7 CH-8052 Zürich (CH)**

(74) Vertreter: **Travnicek, Richard MAAG-ZAHNRÄDER & -MASCHINEN AG Patentabteilung Hardstrasse 219 CH-8023 Zürich (CH)**

Courier Press, Leamington Spa, England.

EP 0 163 070 B1

**Beschreibung**

Die Erfindung betrifft einen Zahnmesstaster für eine Verzahnungsmessmaschine, mit einem Gehäuse, das einen auslenkbaren Tasterbalken enthält, der an einem Ende eine Tastspitze und am anderen Ende ein Messsystem trägt, und mit einer an dem Gehäuse befestigen Drehlagervorichtung für den Tasterbalken, die mit zunehmender Auslenkung des Tasterbalkens eine zunehmende Gegenkraft erzeugt.

Die Druckschrift DE 20 13 639 — ARISTO zeigt eine Messfühler-anordnung, welche einen niedrigen, vom Handdruck unabhängigen Tastdruck aufweist, der durch ein aus zwei axial gegeneinander beweglichen Fühlergehäuseteilen, welche mit einer den Tastdruck übersteigenden Kraft federnd in einer genau definierten Ruhelage gehalten werden, verwirklicht wird. Ein zweites axiales Messsytem erasst die Relativbewegungen dieser Gehäuseteile, wobei die Nullstellung dieses zweiten Messsytems mit der Ruhelage der Gehäuseteile übereinstimmt. Dabei wird die den Tastdruck hervorrufende Rückstellkraft durch eine koaxial zum Taster angeordnete Druckluftzylinder-Kolbeneinheit erzeugt. Darüberhinaus können die beiden axialen Messsysteme mit einem ihrer Elemente in elektromagnetische Spulensysteme eintauchen, wobei die beiden axialen Messsysteme elektrisch so zusammengeschaltet sind, dass das zweite axiale Messsystem bei einem Messsignal-Nulldurchgang des ersten axialen Messsytems abgeschaltet und bei Ueberschreiten eines vorgegebenen Messsignalbetrages eingeschaltet wird. Ausserdem wird eine kardanische Aufhängung des Messfühlers mit Federkraft axial ausgerichtet gehalten, deren Rückstellkraft erheblich grösser als der Tastdruck ist.

Diese Ausführung einer Messfühleranordnung ist sehr kompliziert im Aufbau und für die Herstellung teuer, wobei die Fehleranfälligkeit wegen dem komplizierten Aufbau sehr gross ist.

Ein anderer Taster zur Werkstückantastung ist in der DE 23 56 030 — LEITZ beschrieben. Dieser Taster weist ein Federparallelogramm je Koordinatenrichtung für Translationsbewegungen auf, wobei zusätzliche federnde Mittel zur Variation der Federkonstante bei mindestens einem Federparallelogramm als Funktion der Tasterauslenkung in Richtung der dem Federparallelogramm zugeordneten Koordinate vorgesehen sind.

Bei dieser Ausführung ist die, durch die beiden Federparallelogramme bedingte Grösse des Tasters, inbesondere bei einer Zahnrad-Messmaschine, für die Arbeit an Zahnflanken oft sehr kleiner Zähne sehr nachteilig.

Ein weiterer bekannter Zahnmesstaster (DE 23 64 918 — MAAG) hat als Drehlagervorrichtung ein Kreuzfedergelenk aus zwei zueinander rechtwinklig angeordneten Blattfedern. Mit diesem Taster kann jeweils immer nur eine linke oder eine rechte Zahnflanke abgetastet werden, und zu diesem Zweck muss der Taster in eine bestimmte Auschlagrichtung vorgespannt werden, wofür ein drahbarer Ring vorgesehen ist, der eine schiefe Ebene aufweist, die auf Flachfedern wirkt, welche den Taster in die eine oder andere Endlage drücken.

Drückt nun die zu prüfende Zahnflanke in der Gegenrichtung gegen die Tastspitze, dann erfährt der Tasterbalken eine Schwenkbewegung in seiner Auslenkebene in Richtung der Mittelstellung und entgegen der Federkraft einer der beiden Flachfedern. Diese Lage wird durch das Meßsystem erfaßt.

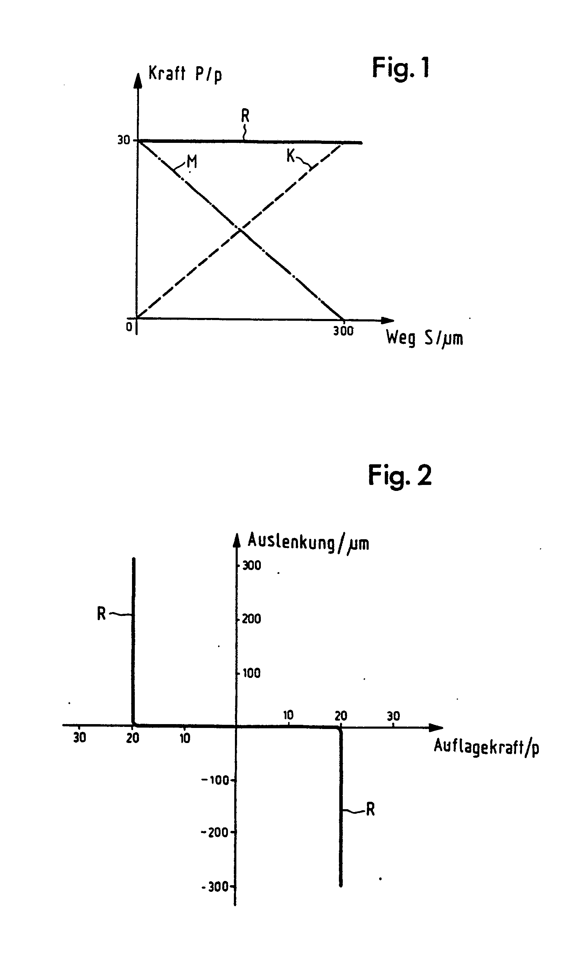

Da dieser bekannte Zahnmeßtaster von Hand auf eine zu prüfende linke oder rechte Zahnflanke umgeschaltet werden muß, kann er nicht in einer automatischen Verzahnungsmeßmaschine verwendet werden. Es wäre zwar denkbar, den für das Vorspannen der Flachfedern vorgesehenen Einstellring mit einem ferngesteuerten Antrieb zu versehen, das ist jedoch aus Platzgründen nicht möglich. Aus der Mittelstellung des Tasterbalkens heraus kann bei dem bekannten Meßtaster aber auch nicht gemessen werden, weil die Flachfedern und die Blattfedern des Kreuzfedergelenks in der Mittelstellung eine Kraft von null erzeugen und mit zunehmender Auslenkung eine zunehmend größer werdende Kraft liefern, die etwa den durch die gestrichelte Kurve K in dem Kraft-Weg-Diagramm in Fig. 1 dargestellten Verlauf hat. Damit bei dem bekannten Zahnmeßtaster überhaupt reproduzierbare Meßergebnisse erzielt werden können, muß dieser aus der Mittelstellung heraus zunächst in die eine oder andere Richtung mit bestimmter Vorspannung ausgelenkt werden. Die Kurve K zeigt im übrigen, daß bei dem bekannten Zahnmeßtaster der Auflagedruck der Tastspitze sehr stark vom Auslenkweg abhängig ist. Messungen mit veränderlichen Auflagedrücken ergeben aber besonders bei rauhen Zahnflankenoberflächen beträchtliche Fehler, wenn mit einer Genauigkeit von 1 µm gemessen werden soll. Aufgrund des mit zunehmender Auslenkung zunehmenden Meßdruckes kann der bekannte Zahnmeßtaster eigentlich nur Vergleichswerte liefern, die jeweils anhand von Eichkurven und dgl. interpretiert werden müssen. Dieses Meßverfahren ist für eine automatische Verzahnungsmeßmaschine, bei der die Auswertung der Messung mittels Computer erfolgt, ungeeignet, weil dem Computer möglichst Absolutwerte geliefert werden sollten.

Das setzt aber voraus, daß im gesamten Meßbereich mit möglichst gleichem Meßdruck gearbeitet wird, was bei dem bekannten Zahnmeßtaster aus den dargelegten Gründen nicht möglich ist. Das Kreuzfedergelenk und die zusaetzlichen Rueckstellfedern ergeben eine nicht konstante, sondern eine mit der Auslenkung ansteigende Rueckstellkraft. Dies ist nachteilig, weil die Tastarmdurchbiegung mit zunehmender Rueckstellkraft ebenfalls zunimmt und somit eine nicht konstante Durchbiegung des Tastarmes resultiert. Eine solche hat im allgemeinen ein nicht lineares Verhalten des Messtasters zur Folge, welches insbesondere fuer reproduzierbare Messergebnisse im Hoechstgenauigkeitsbereich unbrauchbar ist, denn die Materialeigenschaften gehen solcherweise in die messresultate mit ein. Weiter wäre bei dem bekannten Zahnmeßtaster eine definierte Mittelpunktlage auch nicht ohne weiteres erreichbar, weil die Endstellungen seines Tasterbalkens durch federnde Anschläge festgelegt werden.

Aufgabe der Erfindung ist es, einen Zahnmeßtaster der eingangs genannten Art so auszubilden, daß ohne Umschaltung auf rechte/linke Zahnflanke aus einer konstanten Mittelstellung des Tasters heraus über dem gesamten Meßweg mit konstantem Meßdruck gemessen werden kann.

Diese Aufgabe ist gemäß der Erfindung gelöst durch zwei auf zueinander entgegengesetzten Seiten des Tasterbalkens in dessen Auslenkebene in dem Bereich der dem das Meßsystem tragenden Tasterbalkenende benachbart ist, angeordnete Drehbalken, die jeweils mittels eines Drehlagers und eines Anschlags zwischen dem Gehäuse und dem Tasterbalken so gelagert sind, daß sie den Tasterbalken in einer Mittelstellung halten und daß bei jeder Auslenkung des Tasterbalkens einer der Drehbalken durch den Tasterbalken mitgenommen wird und der andere Drehbalken seine Ausgangsstellung beibehält, und umgekehrt, und durch zwei Magnete, die beide an dem Tasterbalken oder an dem einen bzw. anderen Drehbalken befestigt sind und eine zu der Gegenkraft entgegengerichtete Anziehungskraft auf den ihnen gegenüberliegenden Balken ausüben.

Bei dem Zahnmeßtaster nach der Erfindung sind die Flachfedern nicht mehr vorhanden, vorhanden ist aber noch die aus Blattfedern bestehende Drehlagervorrichtung, die bei zunehmender Auslenkung des Tasters eine zunehmende Gegenkraft erzeugt.

In der Ausgangstellung üben beide Magnete auf den ihnen gegenüberliegenden Balken gleich große Anziehungskräfte aus, welche über die Anschläge die Drehbalken in der Ausgangsstellung und damit den Tasterbalken in einer genau definierten Mittelstellung halten. Wenn der Tasterbalken ausgelenkt wird, nimmt die durch die Drehlagervorrichtung erzeugte Gegenkraft zwar zu, gleichzeitig nimmt aber die magnetische Anziehungskraft, die zwischen dem Tasterbalken und demjenigen Drehbalken wirksam ist, welcher bei der Auslenkung seine Ausgangstellung beibehält, ab, so daß die abnehmende Anziehungskraft und die zunehmende Gegenkraft sich zu einer resultierenden Kraft addieren, die über dem Auslenkweg konstant ist. Dieser Zusammenhang zwischen den Kräften ist in Fig. 1 zu erkennen, wo M die Anziehungskraft eines Magnets und R die resultierende Gesamtkraft darstellt. Die Kurven K and M sind idealisiert dargestellt, denn in Wirklichkeit besteht jeweils eine quadratische Abhängigkeit zwischen der Kraft und dem Weg. Als Gesamtergebnis ergibt sich aber ein über dem Auslenkweg konstanter Auflagedruck der Tastspitze, wie die in Fig. 2 dargestellten Meßergebisse, die mit einem Meßtaster nach der Erfindung erzielt worden sind, ohne weiteres erkennen lassen. Diese Meßergebnisse zeigen im übrigen, daß der konstante Meßdruck bereits nach einer geringfügigen Auslenkung aus der Mittelstellung um etwa 5 µm erreicht wird.

Vorteilhafte Ausgestaltungen der Erfindung bilden den Gegenstand der Unteransprüche.

In der Ausgestaltung der Erfindung nach Anspruch 3 word durch die Abstandshalter von vornherein ein bestimmter Abstand zwischen den Magneten und dem ihnen jeweils gegenüberliegenden Balken aufrechterhalten und dadurch auf der Kurve M ein bestimmter Anfangspunkt gewählt, der gewährleistet, daß die Addition der Anziehungskraft und der Gegenkraft bereits bei minimaler Auslenkung den vollen Meßdruck ergibt.

In der Ausgestaltung der Erfindung nach den Ansprüchen 4 bis 6 werden als Abstandshalter antimagnetische Kugeln oder Stifte (z.B. aus Keramik) gewählt, die das Magnetfeld nicht beeinflussen und den gewählten Abstand sehr genau aufrechterhalten.

In der Ausgestaltung der Erfindung nach den Ansprüchen 7 oder 9 läßt sich mittels der Einstellschrauben die Mittelstellung des Tasterbalkens sehr genau justieren und bei Bedarf nachjustieren.

In der Ausgestaltung der Erfindung nach Anspruch 11, die für einen Zahnmeßtaster bestimmt ist, bei welchem die Drehlagervorrichtung des Tasterbalkens aus einem Blattfederparallelogramm besteht, wird, wenn die durch die Blattfedern erzeugte Gegenkraft nicht ausreicht, um die abnehmende Anziehungskraft der Magnete bei der Auslenkung zu kompensieren, ein Kompensationsmagnet vorgesehen, der eine zusätzliche Gegenkraft erzeugt, damit sich der in Fig. 2 gezeigte Verlauf des Auflagedruckes über dem Auslenkweg ergibt.

Ausführungsbeispiele der Erfindung werden im folgenden unter Bezugnahme auf die Zeichnungen näher beschrieben.

Es zeigt

Fig. 1 ein Diagramm zur Erläuterung der Abhängigkeit zwischen Kraft aus Auslenkweg bei einem bekannten Zahnmeßtaster und bei dem Zahnmeßtaster nach der Erfindung,

Fig. 2 ein Meßdiagramm, das den Tastspitzenauflagedruck in Abhängigkeit vom Auslenkweg bei dem Meßtaster nach der Erfindung zeigt,

Fig. 3 eine erste Ausführungsform des Zahnmeßtasters nach der Erfindung und

Fig. 4 eine zweite Ausführungsform des Zahnmeßtasters nach der Erfindung, wobei ebenso wie in Fig. 3 lediglich die für die Erfindung wesentlichen Teile des Meßtasters dargestellt sind und der Übersichtlichkeit halber zusätzlich noch das Meßsystem weggelassen worden ist.

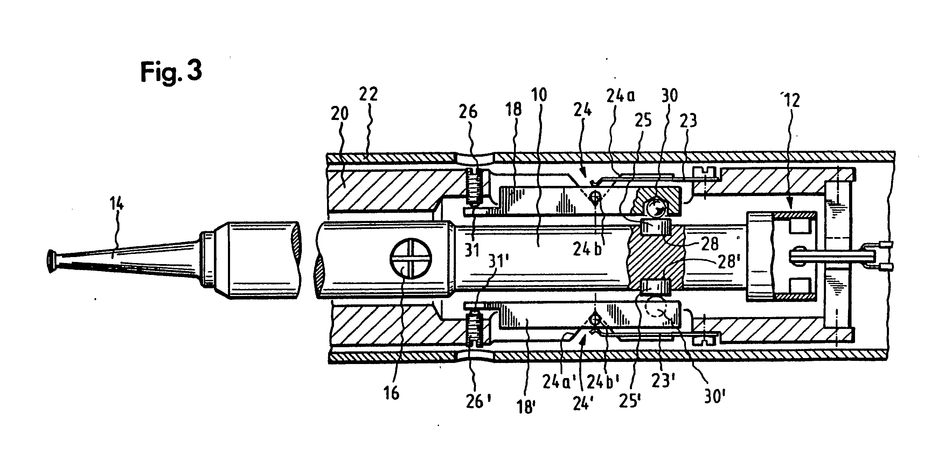

Fig. 3 zeigt eine erste Ausführungsform eines Zahnmeßtasters, dessen Tasterbalken 10 den beweglichen Teil eines Meßsystems 12 trägt, das den aus der DE-PS 23 64 918 bekannten Aufbau haben kann. Da die Art des verwendeten Meßsystems für den hier beschriebenen Zahnmeßtaster nicht von Bedeutung ist, erübrigt sich eine genauere Beschreibung. Es genügt anzugeben, daß das Meßsystem bei der Auslenkung der Tastspitze 14 in einer Richtung ein Ausgangssignal mit einem Vorzeichen und bei der Auslenkung in der anderen Richtung ein Ausgangssignal mit dem entgegengesetzten Vorzeichen liefert, so daß sich ohne weiteres erkennen läßt, ob bei dem Meßvorgang eine linke oder eine rechte Zahnflanke abgetastet wird.

Bei dem Zahnmeßtaster nach Fig. 3 ist der Tasterbalken 10 mit einer Drehlagervorrichtung in Form eines aus der DE-PS 23 64 918 bekannten Kreuzfedergelenks 16 versehen.

Der Tasterbalken 10 ist in Fig. 3 in seiner Mittelstellung dargestellt, aus der er in einer horizontalen Ebene auslenkbar ist (d.h. in der Zeichenebene der Fig. 3 nach oben und unten). Beiderseits des Tasterbalkens 10 sind in der Auslenkebene Drehbalken 18, 18' vorgesehen, die in ihrer Ausgangsstellung dargestellt sind, in welcher sie den Tasterbalken 10 in seiner Mittelstellung halten. Da der Aufbau des Zahnmeßtasters bezüglich einer zu der Zeichenebene rechtwinkeligen und durch die Mittelachse des Tasterbalkens gehenden Ebene symmetrisch ist, wird nur der in Fig. 3 obere Teil ausführlicher beschrieben.

Der Zahnmeßtaster hat ein von einer Schutzhülse 22 umgebenes Gehäuse 20, welches Abstand von dem Tasterbalken 10 aufweist und die äußeren Enden des Kreuzfedergelenks 16 trägt, so daß der Tasterbalken 10 innerhalb des Gehäuses um das Kreuzfedergelenk schwenkbar ist. Der Drehbalken 18 ist in dem Bereich zwischen dem Kreuzfedergelenk 16 und dem dem Meßsystem 12 benachbarten Ende des Tasterbalkens angeordnet und mit einem Prismenlager versehen, das insgesamt mit der Bezugszahl 24 bezeichnet ist. Das Prismenlager 24 besteht aus einem in das Gehäuse 20 geschnittenen Prisma in Form von zwei im Querschnitt V-förmigen Kerben 24a und 24a', in denen eine quer zur Längsrichtung des Zahnmeßtasters an dem Drehbalken 18 befestigte Achse 24b gelagert ist, so daß der Drehbalken 18 im Gegenuhrzeigersinn drehbar ist, wenn die Tastspitze 14 im Gegenuhrzeigersinn ausgelenkt wird. Eine als Blattfeder ausgebildete Niederhaltefeder 23 ist an ihrem einen Ende an dem Gehäuse angeschaubt und drückt an ihrem anderen Ende oberhalb der Achse 24b auf den Drehbalken 18, um diesen in seinem Prismenlager 24 zu halten. Eine Drehung des Drehbalkens 18 im Uhrzeigersinn wird durch einen Anschlag begrenzt, der in dem hier dargestellten Beispiel aus einer in das Gehäuse 20 eingeschraubten Einstellschraube 26 besteht. Mit den Einstellschrauben 26 und 26' werden die Drehbalken 18, 18' in derartiger Ausgangsstellung justiert, daß sich der Tasterbalken genau in seiner Mittelstellung befindet. Die Einstellschraube 26' gestattet dem Drehbalken 18' eine Drehung im Uhrzeigersinn und verhindert eine Drehung im Gegenuhrzeigersinn. Der Tasterbalken trägt in seinem Bereich, der dem von den Einstellschrauben 26, 26' abgewandten Ende der Drehbalken 18, 18' benachbart ist, zwei Magnete 25, 25', die in dem hier dargestellten Beispiel zwar permanentmagnete sind, jedoch auch Elektromagnete sein könnten. Die Magnete 25, 25' sind einfach in Sacklöcher 28, 28' eingeklebt und stehen jeweils in gleichem Ausmaß über die äußere Oberfläche des Tasterbalkens vor. Gegenüber den Magneten 25, 25' sind in den Drehbalken 18, 18' Sacklöcher vorgesehen, in denen jeweils eine antimagnetische Kugel 30, 30' angeordnet ist, die zu einem im folgenden noch näher erläuterten Zweck in bestimmtem Ausmaß über die dem Tasterbalken 10 benachbarte Oberfläche des Drehbalkens übersteht. Jede Kugel kann eine polierte Kugel aus antimagnetischem Stahl oder eine Keramikkugel sein. Die Enden 31, 31', mit denen die Einstellschrauben 26, 26' die Drehbalken berühren, können ebenfalls kugelförmig ausgebildet oder mit einer Stahl- oder Keramikkugel versehen sein, wie in Fig. 3 angedeutet.

Das Ausmaß, um welches die Kugeln 30, 30' über die Oberfläche der Drehbalken überstehen, wird so gewählt, daß die Magnete 25, 25' auf die aus Eisen bestehenden Drehbalken 18, 18' eine Anziehungskraft ausüben, deren weiterer Verlauf über dem Auslenkweg so ist, daß sich durch die Addition dieser Anziehungskraft und der durch das Kreuzfedergelenk 16 ausgeübten Gegenkraft eine über dem Auslenkweg konstante Kraft R (vgl. Fig. 1 und 2) bereits nach minimaler Auslenkung des Tasterbalkens aus seiner Mittelstellung ergibt. Wenn im Betrieb des Zahnmeßtasters die Tastspitze 14 beispielshalber in Fig. 3 nach oben ausgelenkt wird, wird der Drehbalken 18' durch den Tasterbalken über den Magnet 25', der gegen die Kugel 30' drückt, im Uhrzeigersinn gedreht. Während der Drehbalken 18' also durch den Tasterbalken bei dessen Auslenkung mitgenommen wird, behält der Drehbalken 18 seine Ausgangslage bei. Der Magnet 25 entfernt sich deshalb von dem Drehbalken 18 und übt daher eine zunehmend kleinere Anziehungskraft auf den Drehbalken 18 aus. Der Verlauf dieser Anziehungskraft entspricht der Kurve M in Fig. 1. Mit zunehmender Drehung des Tasterbalkens 10 um das Kreuzfedergelenk 16 nimmt aber die durch das Kreuzfedergelenk erzeugte Gegenkraft zu. Durch entsprechende Wahl der Magnete 25, 25' und ihres Abstands von den Drehbalken 18, 18' in deren Ausgangsstellung unter Berücksichtigung der durch das Kreuzfedergelenk erzeugten Gegenkraft ergibt sich eine Kräftebilanz, die zu der Kurve R führt, d.h. zu einem über dem Auslenkweg konstanten Auflagedruck der Tastspitze 14 auf einer Zahnflanke.

In dem in Fig. 3 dargestellten Ausführungsbeispiel sind zwar die Magnete 25, 25' an dem Tasterbalken 10 und die Kugeln 30, 30' an den Drehbalken 18 bzw. 18' befestigt, es ergäbe sich jedoch genau die gleiche Wirkungsweise, wenn die Magnete an den Drehbalken und die Kugeln an dem Tasterbalken befestigt würden. In diesem Fall wäre es lediglich erforderlich, die Drehbalken 18, 18' aus unmagnetischem Material (z.B. Messing) herzustellen und den Tasterbalken statt aus unmagnetischem Material (z.B. Messing) aus Eisen herzustellen oder in seinem den Magneten benachbarten Bereich mit einem Eisenwerkstoff zu versehen.

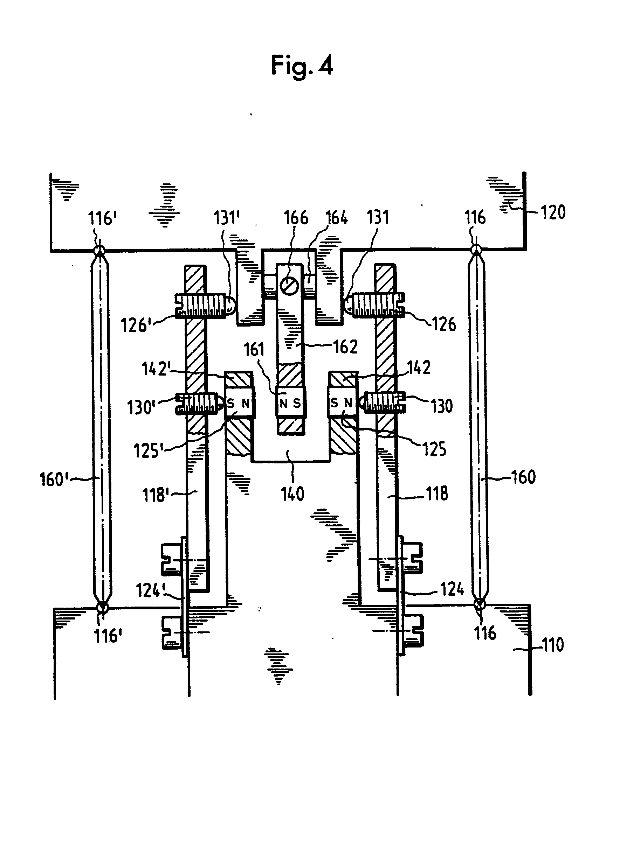

Fig. 4 zeigt eine zweite Ausführungsform des Zahnmeßtasters, bei welchem als Drehlagervorrichtung für den Tasterbalken statt eines Kreuzfedergelenks ein Parallelogramm mit Blattfedern 160, 160' vorgesehen ist, welche eine Relativbewegung zwischen zwei Teilen 110 und 120 gestatten. Zur Vereinfachung der folgenden Beschreibung wird angenommen, daß das Teil 110 das dem Meßsystem (nicht dargestellt) benachbarte Ende des Tasterbalkens darstellt (die Tastspitze, die sich in Fig. 4 unten befinden würde, ist ebenfalls nicht dargestellt) und daß das Teil 120 einem Teil des Gehäuses entspricht und somit feststeht. Die vier Verbindungspunkte der Blattfedern 160, 160' mit dem Tasterbalken 110 und dem Gehäuse 120 bilden Drehgelenke 116, 116', die bei der Auslenkung des Tasterbalkens aus der dargestellten Mittelstellung eine geringfügige Gegenkraft erzeugen.

Der Tasterbalken 110 besteht ebenfalls aus unmagnetischem Material (z.B. Messing) und ist an seinem dargestellten Ende mit einer Aussparung 140 versehen, in deren beiden Seitenwänden 142, 142' die Magnete 125, 125' einander diametral gegenüberliegend befestigt sind. Die Drehbalken 118, 118' sind an ihrem unteren Ende jeweils mittels einer Blattfeder 124, 124' als Drehlager an dem Tasterbalken 110 befestigt, so daß bei einer Verschwenkung der Drehbalken die Blattfedern 124, 124' ebenfalls eine Gegenkraft erzeugen, die sich zu der in den Drehgelenken 116, 116' erzeugten Gegenkraft addiert.

Bei der Ausführungsform nach Fig. 4 sind statt der Kugeln 30, 30' in der Ausführungsform nach Fig. 3 antimagnetische Stifte 130, 130' vorgesehen, und die Stiftschrauben 126, 126' sind in die Drehbalken 118, 118' eingeschraubt und stützen sich mit ihren jeweiligen Ende 131, 131' auf einem Teil des Gehäuses 120 ab.

Wenn im Meßbetrieb die in Fig. 4 nicht dargestellte Tastspitze im Gegenuhrzeigersinn oder nach rechts ausgelenkt wird, macht der Tasterbalken 110 diese Auslenkbewegung wegen der Drehgelenke 116, 116' mit. Der Abstand zwischen dem Magnet 125 und dem Drehbalken 118 ändert sich dabei nicht, weil der Tasterbalken 110 den Drehbalken 118 mitnimmt, der sich über den Stift 130 auf dem Magnet 125 abstützt. Dagegen behält der Drehbalken 118' seine Ausgangslage bei, weil sich die Einstellschraube 126' an dem Gehäuse 120 mit ihrem Ende 131' abstützt, während sich der Magnet 125' von dem Drehbalken 118' entfernt. Die durch den Magnet 125' auf den Drehbalken 118' ausgeübte Anziehungskraft nimmt mit zunehmender Auslenkung ab, so daß sich die gleiche Kräftebilanz wie bei der Ausführungsform nach Fig. 3 ergibt.

Für den Fall, daß die durch die Drehlagervorrichtung 116, 116' und durch die Blattfedern 124, 124' erzeugte Gegenkraft zu gering ist, um durch Addition mit der Anziehungskraft des einen oder anderen Magnets 125, 125' einen über dem Auslenkbereich konstanten Auflagedruck des Tastfingers zu erzeugen, ist ein Kompensationsmagnet 161 zwischen den beiden Magneten 125, 125' in der Aussparung 140 vorgesehen. Der Kompensationsmagnet 161 ist an einem Halter 162 aus Messing oder anderem unmagnetischen Material befestigt, der auf einer an dem Gehäuse 120 befestigten Schiene 164 verschiebbar und durch eine Feststellschraube 166 festlegbar ist. Der Magnet 161 ist in einer Linie mit den Magneten 125, 125' so gepolt angeordnet, daß seinen Polen jeweils gleichnamige Pole der Magnete 125, 125' gegenüberliegen (in dem dargestellten Ausführungsbeispiel lautet die Polung der Magnete von links nach rechts SN-NS-SN).

Wenn in dem zuvor mit Bezug auf Fig. 4 geschilderten Fall die Tastspitze im Gegenuhrzeigersinn ausgelenkt wird, bewegt sich der Magnet 125' von dem Drehbalken 118' weg, so daß seine auf den Drehbalken 118' ausgeübte Anziehungskraft mit zunehmender Auslenkung kleiner wird. Gleichzeitig nähert sich aber der Magnet 125' dem Kompensationsmagnet 160, wodurch eine Kompensations- oder Gegenkraft erzeugt wird, die sich zu der Gegenkraft der Drehgelenke 116, 116' und der Blattfedern 124, 124' addiert und bei entsprechender Wahl der Magnete und ihres gegenseitigen Abstands eine über dem Auslenkbereich konstante Auflagekraft der Tastspitze ergibt.

Der Zahnmeßtaster nach Fig. 4 würde auf gleiche Weise arbeiten, wenn das Teil 120 beweglich ausgebildet und mit dem Tastfinger verbunden würde und das Teil 110 feststehend ausgebildet würde.

Das in Fig. 2 dargestellte Meßergebnis ist bei einem Zahnmeßtaster nach Fig. 3 erhalten worden, bei dem Magnete 18, 18' des Fabrikats "Vacomax 200" mit einem Durchmesser von 3 mm und einer Dicke von 1,5 mm sowie "SRO"-Keramikkugeln 30, 30' verwendet wurden.

**Patentansprüche**

1. Zahnmeßtaster für eine Verzahnungsmeßmaschine, mit einem Gehäuse (20; 120), das einen auslenkbaren Tasterbalken (10; 110) enthält, der an einem Ende eine Tastspitze (14) und am anderen Ende ein Meßsystem (12) trägt, und mit einer an dem Gehäuse befestigten Drehlagervorrichtung (16; 116, 116') für den Tasterbalken, die mit zunehmender Auslenkung des Tasterbalkens eine zunehmende Gegenkraft erzeugt, gekennzeichnet durch zwei auf zueinander entgegengesetzten Seiten des Tasterbalkens. (10; 110) in dessen Auslenkebene in dem Bereich, der dem das Meßsystem (12) tragenden Tasterbalkenende benachbart ist, angeordnete Drehbalken (18, 18'; 118, 118'), die jeweils mittels eines Drehlagers (24, 24'; 124, 124') und eines Anschlags (26, 26'; 126, 126') zwischen dem Gehäuse (20; 120) und dem Tasterbalken so gelagert sind, daß sie den Tasterbalken in einer Mittelstellung halten und daß bei jeder Auslenkung des Tasterbalkens einer der Drehbalken durch den Tasterbalken mitgenommen wird und der andere Drehbalken seine Ausgangsstellung beibehält, und umgekehrt, und durch zwei Magnete (25, 25'; 125, 125'), die beide an dem Tasterbalken oder an dem einen bzw. anderen Drehbalken befestigt sind und eine zu der Gegenkraft (K) entgegengerichtete Anziehungskraft (M) auf den ihnen gegenüberliegenden Balken ausüben.

2. Zahnmeßtaster nach Anspruch 1, dadurch gekennzeichnet, daß die Magnete (25, 25'; 125, 125') an dem Tasterbalken (10; 110) befestigt sind und daß wenigstens der den Magneten benachbarte Teil der Drehbalken (18, 18'; 118, 118') aus Eisenwerkstoff besteht.

3. Zahnmeßtaster nach Anspruch 2, dadurch gekennzeichnet, daß die Drehbalken (18, 18'; 118, 118') Abstandshalter (30, 30'; 130, 130') tragen, die die Magnete (25, 25'; 125, 125') und die Drehbalken in deren Ausgangsstellung jeweils in kleinem Abstand voneinander halten.

4. Zahnmeßtaster nach Anspruch 3, dadurch gekennzeichnet, daß die Abstandshalter (30, 30') antimagnetische Kugeln sind.

5. Zahnmeßtaster nach Anspruch 3, dadurch gekennzeichnet, daß die Abstandshalter (130, 130') antimagnetische Stifte sind.

6. Zahnmeßtaster nach Anspruch 4 oder 5, dadurch gekennzeichnet, daß die Abstandshalter (30, 30'; 130, 130') aus Keramik bestehen.

7. Zahnmeßtaster nach einem der Ansprüche 1 bis 6, dadurch gekennzeichnet, daß die Anschläge (126, 126') jeweils aus einer Einstellschraube bestehen, die an ihrem einen Ende in den zugeordneten Drehbalken (118, 188') geschraubt ist und in dessen Ausgangsstellung mit ihrem anderen Ende (131, 131') das Gehäuse berührt.

8. Zahnmetaster nach Anspruch 7, dadurch gekennzeichnet, daß die Drehlager (124, 124') der Drehbalken (118, 118') aus Blattfedern bestehen, welche die von den Einstellschrauben (126, 126') entfernten Enden der Drehbalken elastisch mit dem Tasterbalken (110) verbinden.

9. Zahnmeßtaster nach einem der Ansprüche 1 bis 6, dadurch gekennzeichnet, daß die Anschläge (26, 26') jeweils aus einer Einstellschraube bestehen, die an ihrem einen Ende in das Gehäuse (20) geschraubt und an ihrem anderen Ende (31, 31') das benachbarte Ende des ihr zugeordneten und in der Ausgangsstellung befindlichen Drehbalkens (18, 18') berührt.

10. Zahnmeßtaster nach einem der Ansprüche 1 bis 6 oder 9, dadurch gekennzeichnet, daß die Drehlager (24, 24') der Drehbalken (18, 18') jeweils aus einem Prismenlager bestehen, welches ein in dem Gehäuse (20) gebildetes Prisma (24a, 24a') aufweist, in dem eine an dem Drehbalken befestigte Achse (24b, 24b') gelagert und durch eine Niederhaltefeder (23, 23') gesichert ist.

11. Zahnmeßtaster nach einem der Ansprüche 2 bis 8, dadurch gekennzeichnet, daß das dem Meßsystem (12) benachbarte Ende des Tasterbalkens (110) mit einer Aussparung (140) versehen ist, daß die beiden Magnete (125, 125') in einander gegenüberliegenden Wänden (142, 142') der Aussparung so angeordnet sind, daß sich in der Aussparung ungleichnamige Pole gegenüberliegen, und daß ein an dem Gehäuse (120) einstellbar befestigter Kompensationsmagnet (161) zwischen den beiden Magneten (125, 125') mit Abstand von denselben so angeordnet ist, daß sich jeweils gleichnamige Magnetpole gegenüberliegen.

**Revendications**

1. Palpeur mesureur de dents pour machine à mesurer les dentures, comportant un boîtier (20; 120) qui contient une tige de palpage (10; 110) montée oscillante, portant à une extrémité une pointe de palpage (14) et à l'autre extrémité un système de mesure (12) et comportant un palier rotatif (16; 116, 116') fixé sur le boîtier et destiné à la tige de palpage, ledit système produisant une force antagoniste croissante à mesure que croît la déviation de la tige de palpage, caractérisé par la présence de deux tiges rotatives (18, 18'; 118, 118') disposées sur les côtés mutuellement opposés de la tige de palpage (10; 110), dans le plan de déviation de cette dernière, au voisinage de l'extrémité de la tige de palpage portant le système de mesure (12), lesdites tiges rotatives étant montées respectivement au moyen d'un palier rotatif (24, 24'; 124, 124') et d'une butée (26, 26'; 126, 126') entre le boîtier (20; 120) et la tige de palpage, de telle manière qu'elles maintiennent la tige de palpage dans une position centrale et que, à chaque déviation de ladite tige de palpage, l'une des tiges rotatives est entraînée par cette tige de palpage et que l'autre tige rotative conserve sa position d'origine et inversement par l'effet de deux aimants (25, 25'; 125, 125') fixés sur la tige de palpage ou sur l'une et l'autre des tiges rotatives et exerçant une force d'attraction (M) opposée à la force antagoniste (K) sur la tige qui leur fait face.

2. Palpeur mesureur de dents selon la revendication 1, caractérisé par le fait que les aimants (25, 25'; 125, 125') sont fixés sur la tige de palpage (10, 110) et qu'au moins la partie des tiges rotatives (18, 18'; 118, 118') placée au voisinage des aimants est constituée en un matériau ferreux.

3. palpeur mesureur de dents selon la revendication 2, caractérisé par le fait que les tiges rotatives (18, 18'; 118, 118') portent des pièces d'écartement (30, 30'; 130, 130') qui maintiennent un léger écart mutuel entre les aimants (25, 25'; 125, 125') d'une part et les tiges rotatives d'autre part, placées dans leur position d'origine.

4. Palpeur mesureur de dents selon la revendication 3, caractérisé par le fait que les pièces d'écartement (30, 30') sont des billes antimagnétiques.

5. Palpeur mesureur de dents selon la revendication 3, caractérisé par le fait que les pièces d'écartement (130, 130') sont des tiges antimagnétiques.

6. Palpeur mesureur de dents selon la revendication 4 ou 5, caractérisé par le fait que les pièces d'écartement (30, 30'; 130, 130') sont constituées en céramique.

7. Palpeur mesureur de dents selon l'une des revendications 1 à 6, caractérisé par le fait que les butées (126, 126') sont constituées respectivement d'une vis de réglage qui est vissée à l'une de ses extrémités dans la tige rotative correspondante (118, 118') et qui dans la position d'origine de cette tige touche le boîtier par son autre extrémité (131, 131').

8. Palpeur mesureur de dents selon la revendication 7, caractérisé par le fait que les paliers rotatifs (124, 124') des tiges rotatives (118, 118') sont constitués de ressorts à lames, lesquels relient de manière élastique à la tige de palpage (110) les extrémités des tiges rotatives éloignées des vis de réglage (126, 126').

9. Palpeur mesureur de dents selon l'une des revendications 1 à 6, caractérisé par le fait que les butées (26, 26') sont constituées respectivement d'une vis de réglage qui est vissée à l'une de ses extrémités dans le boîtier (20) et touche à l'autre de ses extrémités (31, 31') l'extrémité adjacente de la tige rotative (18, 18') qui lui est associée et qui se trouve dans sa position d'origine.

10. Palpeur mesureur de dents selon l'une des revendications 1 à 6 ou 9, caractérisé par le fait que les paliers rotatifs (24, 24') des tiges rotatives (18, 18') sont constitués chacun d'un palier en forme de prisme (24a, 24a') disposé à l'intérieur du boîtier (20) et dans lequel est reçu un axe (24b, 24b') fixé sur la tige rotative et maintenu en place par un ressort de maintien (23, 23').

11. Palpeur mesureur de dents selon l'une des revendications 2 à 8, caractérisé par le fait que l'extrémité de la tige de palpage (110) au voisinage du système de mesure (12) est munie d'un évidement (140), que les deux aimants (125, 125') sont disposés dans l'évidement dans des parois, (142, 142') disposées face à face, de telle sorte qu'à l'intérieur de l'évidement sont placés face à face des pôles de polarité contraire et qu'un aimant de compensation (161) fixé de manière réglable sur le boîtier (120) est disposé entre les deux aimants (125, 125') à une certaine distance de ceux-ci de telle sorte que se trouvent placés face à face respectivement des pôles d'aimant de même polarité.

**Claims**

1. Tooth measurement probe for a toothing measurement machine having a housing (20; 120) which contains a displaceable probe arm (10; 110), which probe arm bears at one end a probe point (14) and at the other end a measurement system (12), and having a pivot bearing device (16; 116, 116') attached to the housing for the probe arm, which pivot bearing device generates an increasing counter force with increasing displacement of the probe arm, characterized by two pivot arms (18, 18'; 118, 118') arranged on opposite sides of the probe arm (10; 110) in the plane of displacement of said probe arm in the region which is adjacent to the end of the probe arm bearing the measurement system (12), which pivot arms are each mounted by means of a pivot bearing (24, 24'; 124, 124') and a stop (26, 26'; 126, 126') between the housing (20; 120) and the probe arm in such a way that they hold the probe arm in a central position and that, with each displacement of the probe arm, one of the pivot arms is carried along by the probe arm and the other pivot arm retains its starting position, and vice versa, and characterized by two magnets (25, 25'; 125, 125') which are both attached to the probe arm or to the one or the other pivot arm and exert a magnetism (M) opposed to the counter force (K) on the arms located opposite to them.

2. Tooth measurement probe according to Claim 1, characterized in that the magnets (25, 25'; 125, 125') are attached to the probe arm (10; 110), and in that at least the part of the pivot arms (18, 18'; 118, 118') adjacent to the magnets consists of iron material.

3. Tooth measurement probe according to Claim 2, characterized in that the pivot arms (18, 18'; 118, 118') bear spacers (30, 30'; 130, 130') which hold apart the magnets (25, 25'; 125, 125') and the pivot arms in their starting position in each case with a small spacing.

4. Tooth measurement probe according to Claim 3, characterized in that the spacers (30, 30') are antimagnetic beads.

5. Tooth measurement probe according to Claim 3, characterized in that the spacers (130, 130') are antimagnetic pins.

6. Tooth measurement probe according to Claim 4 or 5, characterized in that the spacers (30, 30'; 130, 130') consist of ceramic material.

7. Tooth measurement probe according to one of Claims 1 to 6, characterized in that the stops (126, 126') each consist of an adjusting screw which is screwed at its one end into the associated pivot arm (118, 188') and, in its starting position, touches the housing with its other end (131, 131').

8. Tooth measurement probe according to Claim 7, characterized in that the pivot bearings (124, 124') of the pivot arms (118, 118') consist of leaf springs which resiliently connect those ends of the pivot arms which are remote from the adjusting screws (126, 126') to the probe arm (110).

9. Tooth measurement probe according to one of Claims 1 to 6, characterized in that the stops (26, 26') each consist of an adjusting screw which at its one end is screwed into the housing (20) and at its other end (31, 31') touches the adjacent end of the pivot arm (18, 18') associated with said adjusting screw and situated in the starting position.

10. Tooth measurement probe according to one of Claims 1 to 6 or 9, characterized in that the pivot bearings (24, 24') of the pivot arms (18, 18') each consist of a prism bearing which has a prism (24a, 24a') formed in the housing (20), in which prism an axle (24b, 24b'), attached to the pivot arm, is mounted and is secured by a holding-down spring (23, 23').

11. Tooth measurement probe according to one of Claims 2 to 8, characterized in that the end of the probe arm (110) adjacent to the measurement system (12) is provided with a recess (140), in that the two magnets (125, 125') are arranged in mutually opposite walls (142, 142') of the recess in such a way that poles of opposite kind are located opposite one another in the recess, and in that a compensation magnet (161), attached adjustably to the housing (120), is arranged between the two magnets (125, 125') with spacing from said magnets in such'a way that in each case magnetic poles of similar kind are located opposite each other.

**Fig. 1**

Kraft P/p

R

30

M

K

0

300

Weg S/μm

**Fig. 2**

Auslenkung/μm

300

200

R

100

30   20   10

10   20   30

Auflagekraft/p

-100

-200

R

-300

Fig. 3

Fig. 4